# EUROPÄISCHE PATENTSCHRIFT

(11) **EP 2 342 096 B1**
(45) Veröffentlichungstag und Bekanntmachung des Hinweises auf die Patenterteilung: **10.08.2016**
(21) Anmeldenummer: 09812485.2
(22) Anmeldetag: 06.10.2009
(51) Int. Cl.: B60N 2/36, B60N 2/433, E05B 77/04

(54) **VERRIEGELUNGSELEMENT FÜR EINEN FAHRZEUGSITZ**
LOCKING ELEMENT FOR A VEHICLE SEAT
ELÉMENT DE VERROUILLAGE POUR UN SIÈGE DE VÉHICULE

(30) Priorität: 17.10.2008 DE 102008051832
(43) Veröffentlichungstag der Anmeldung: 13.07.2011
(73) Patentinhaber: Johnson Controls GmbH, 51399 Burscheid (DE)
(72) Erfinder: VEDDER, Andreas, 42781 Haan (DE); GORDENKO, Igor, 50858 Köln (DE)
(74) Vertreter: Wolff, Felix
(86) Internationale Anmeldenummer: PCT/EP2009/009357
(87) Internationale Veröffentlichungsnummer: WO 2010/054860

(56) Entgegenhaltungen:
- DE-A1- 10 308 678
- DE-B3-102004 001 766
- DE-U1-202005 005 689
- FR-A1- 2 856 718
- GB-A- 2 197 682
- US-A- 5 722 730

## Beschreibung

Die vorliegende Erfindung betrifft ein Verriegelungselement für einen Fahrzeugsitz zur Verriegelung der Rückenlehne an einem Sitzteil und/oder an der Karosserie des Fahrzeuges, mit einer drehbar gelagerten Drehfalle, die verriegelnd mit einem Bolzen zusammenwirkt und einer drehbar gelagerten Rastklinke, die die Drehfalle in ihrer verriegelnden Position sichert.

Derartige gattungsgemäße Verriegelungselemente sind aus dem Stand der Technik, beispielsweise der DE 20 2005 005 689 U1 und der EP 1 516 771 bekannt. Weiterer relevanter Stand der Technik ist offenbart in DE 202 16 345 U1, GB 2 197 682 A, DE 103 08 678 A, FR 2 856 718 A, DE 10 2004 001 766 B3 und US 5,722,730 A.

Ausgehend von diesem Stand der Technik war es die Aufgabe, ein weiteres Verriegelungselement zur Verfügung zu stellen, das bei einem Unfall ein Öffnen der Verriegelung sicher verhindert, ohne aufwendig konstruiert zu sein.

Gelöst wird die Aufgabe mit einem Verriegelungselement für einen Fahrzeugsitz nach Anspruch 1.

Die vorliegende Erfindung betrifft ein Verriegelungselement für einen Fahrzeugsitz. Ein derartiger Fahrzeugsitz kann einer oder mehreren Personen Platz bieten. Es kann sich bei dem Fahrzeugsitz folglich auch um eine Sitzbank handeln. Der Fahrzeugsitz weist ein Sitzteil und eine Rückenlehne auf, wobei die Rückenlehne aus einer Gebrauchsposition, in der sich ein Sitzinsasse auf den Sitz setzen kann, nach vorne klappbar ist, um den Stauraum des Fahrzeuges zu erhöhen oder den Einstieg in das Fahrzeug zu erleichtern. Um die Rückenlehne in der Gebrauchsposition zu fixieren, benötigt der Fahrzeugsitz eine Verriegelung, die die Rücklehne an dem Sitzteil und/oder an der Karosserie des Fahrzeugs reversibel verriegelt.

Das erfindungsgemäße Verriegelungselement weist dafür eine Drehfalle, die beispielsweise an der Rückenlehne angeordnet ist und einen Bolzen, der beispielsweise mit dem Sitzteil oder der Karosserie verbunden ist, auf. Die Drehfalle und der Bolzen wirken im verriegelten Zustand form- und/oder kraftschlüssig zusammen.

Im Bedarfsfall kann die Verriegelung geöffnet werden. Bei einem Unfall muss jedoch sichergestellt sein, dass sich die Verriegelung nicht öffnet. Deshalb weist das erfindungsgemäße Verriegelungselement eine Rastklinke auf, die die Drehfalle in ihrer verriegelnden Position fixiert, indem sie form- und/oder kraftschlüssig mit dieser zusammenwirkt.

Erfindungsgemäß verschieben sich bei einem Unfall sowohl die Drehfalle als auch die Rastklinke relativ zu dem Gehäuse, in dem sie sich befinden. Dadurch geht deren Form- und/oder Kraftschluss zumindest nicht verloren und wird gegebenenfalls sogar noch verbessert, weil sich die Drehfalle und die Rastklinke ineinander verkeilen.

Erfindungsgemäß weisen die Lager jeweils eine Buchse und eine Gleitbuchse auf, wobei die Buchsen in den Öffnungen in dem Gehäuse gelagert sind und die Gleitbuchsen jeweils an ihrem inneren Umfang mit einer der Buchsen und an ihrem äußeren Umfang mit der Bohrung der Drehfalle bzw. der Bohrung der Rastklinke zusammenwirken.

Unter normalen Bedingungen ist die Drehfalle vorzugsweise so vorgesehen, dass die Drehfalle das Gehäuse, in dem sie sich befindet, nicht berührt, d. h. überall ein zumindest kleiner Spalt zwischen Gehäuse und Drehfalle vorhanden ist. Bei einem Unfall und der dadurch bedingten erfindungsgemäßen Verschiebung der Drehfalle und der Rastklinke relativ zu dem Gehäuse, erhält die Drehfalle jedoch mindestens einen, vorzugsweise zwei zusätzliche Anlagepunkte an dem Gehäuse. Durch den/die Anlagepunkte wird ein ungewolltes Öffnen der Verriegelung zusätzlich verhindert. Des Weiteren oder zusätzlich können zumindest einige Bauteile des erfindungsgemäßen Verriegelungselementes, insbesondere die Drehfalle und/oder das Gehäuse, mit einer geringeren Materialstärke und/oder einem einfacheren Material ausgestaltet werden, weil durch die zusätzlichen Anlagepunkte eine bessere Lastverteilung erfolgt.

Erfindungsgemäß sind die Drehfalle und die Rastklinke jeweils mit einem Lager an dem Gehäuse gelagert, das sich bei einem Unfall besonders bevorzugt plastisch deformiert, wodurch es zu der erfindungsgemäßen Verschiebung kommt. Ganz besonders bevorzugt sind diese Lager zumindest teilweise aus Kunststoff.

In einer bevorzugten Ausführungsform weist das Verriegelungselement eine Toleranzausgleichsklinke auf, die ebenfalls die Drehfalle in ihrer verriegelnden Lage sichert. Diese Toleranzausgleichsklinke wird beispielsweise zum Ausgleich von Fertigungstoleranzen und/oder beim Einsatz von sogenannten Taumelreclinern benötigt, mit denen eine Komfortverstellung der Neigung der Rückenlehne erfolgt.

Vorzugsweise hat die Toleranzausgleichsklinke dasselbe Lager wie die Rastklinke und wird bei einem Unfall ebenfalls parallel zu dem Gehäuse verschoben.

In einer weiteren Ausführungsform ist die Gleitbuchse plastisch deformierbar.

In einer weiteren Ausführungsform sind an der Drehfalle als auch an der Rastklinke Drehfedern vorgesehen, die die Drehfalle und die Rastklinke jeweils gegen den Uhrzeigersinn drehend vorspannen.

Im Folgenden wird die Erfindung anhand der Figuren 1 - 3 erläutert. Diese Erläuterungen sind lediglich beispielhaft und schränken den allgemeinen Erfindungsgedanken nicht ein.
Figur 1 zeigt das erfindungsgemäße Verriegelungselement.
Figur 2 zeigt das Verriegelungselement vor einem Unfall.
Figur 3 zeigt das Verriegelungselement nach einem Unfall.

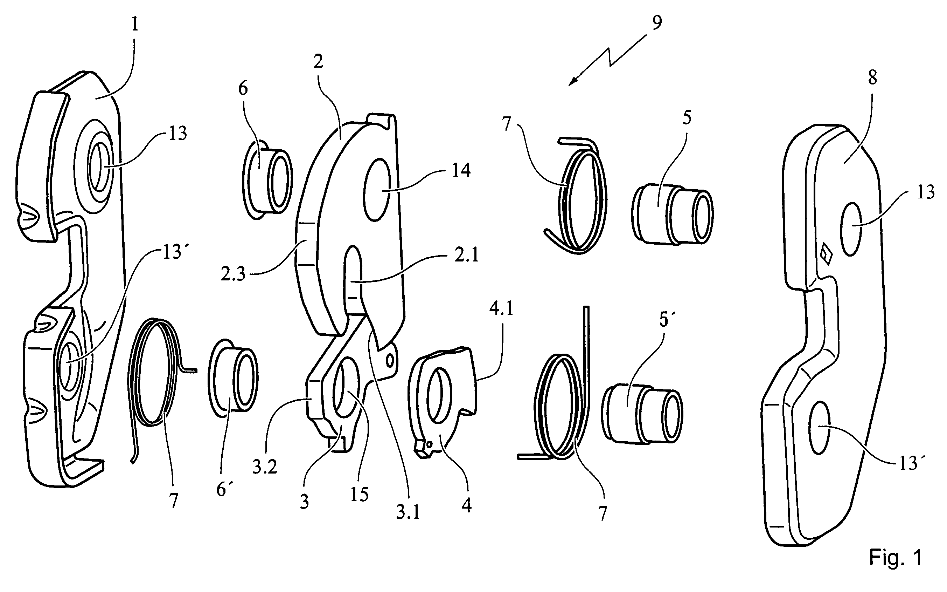

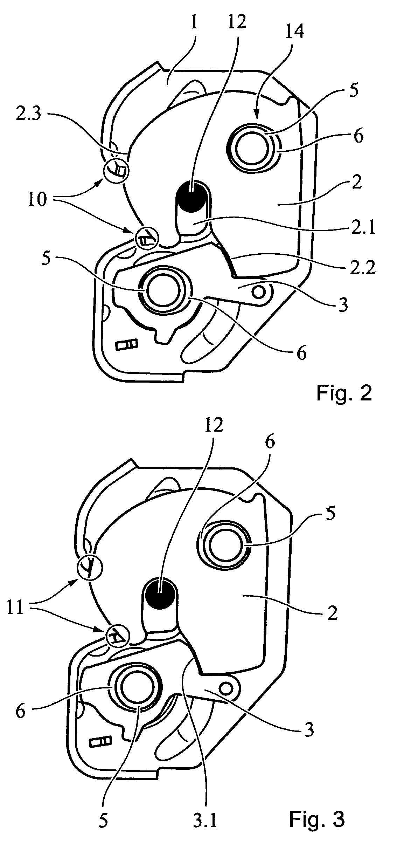

Figur 1 zeigt eine Explosionszeichnung des erfindungsgemäßen Verriegelungselements 9, die in dem vorliegenden Fall an der Rückenlehne eines Fahrzeugsitzes angeordnet ist. Das Verriegelungselement weist ein Gehäuse auf, das aus einem Gehäuseteil 8 und einer Seitenplatte 1 besteht, die miteinander verbunden sind. An beiden Gehäuseteilen 1, 8 sind drehbar die Drehfalle 2 und die Rastklinke 3 gelagert. Dafür sind die Buchsen 5, 5' und die Gleitbuchsen 6, 6' vorgesehen, wobei die Buchsen 5, 5' in den Öffnungen 13, 13' in dem Gehäuse gelagert sind und die Gleitbuchse 6, 6' jeweils an ihrem inneren Umfang mit einer Buchse 5, 5' und an ihrem äußeren Umfang mit der Bohrung 14 der Drehfalle bzw. der Bohrung 15 der Rastklinke zusammenwirkt. Sowohl an der Drehfalle 2 als auch an der Rastklinke 3 sind Drehfedern 7 vorgesehen, die die Drehfalle 2 und die Rastklinke 3 jeweils gegen den Uhrzeigersinn drehend vorspannen. In Figur 1 ist die Drehfalle in ihrem verriegelten Zustand dargestellt, in dem ein Schlitz 2.1 in der Drehfalle 2 einen Bolzen 12 (vgl. Figuren 2 und 3), der beispielsweise an dem Sitzteil oder der Karosserie angeordnet ist, umgreift. Die Rastklinke 3 sichert die Drehfalle 2 in dieser Stellung, indem die Anlagefläche 2.2 der Drehfalle mit der Anlagefläche 3.1 der Rastklinke 3 im Eingriff steht. Zum Öffnen der Verriegelung wird erst die Rastklinke und dann die Drehfalle im Uhrzeigersinn verdreht. Zusätzlich zu der Rastklinke 3 weist das Verriegelungselement noch eine Toleranzausgleichsklinke 4 auf, die ebenfalls drehbar an der Buchse 5' gelagert ist. Die Toleranzausgleichsklinke 4 kann zumindest teilweise unabhängig von der Rastklinke 3 drehen und ist ebenfalls gegen den Uhrzeigesinn drehend mit einer separaten Drehfeder vorgespannt. Die Toleranzausgleichsklinke 4 weist die Anlagefläche 4.1 auf, mit der sie verriegelnd mit der Anlagefläche 2.2 der Drehfalle zusammenwirkt. Bedingt beispielsweise durch Fertigungstoleranzen sind die Anlageflächen zwischen der Drehfalle und der Rastklinke und der Drehfalle und der Toleranzausgleichsklinke zumindest teilweise unterschiedlich.

Wie in Figur 2 zu sehen ist, ist im Normalbetrieb ein Spalt 10 zwischen dem Gehäuseteil 1 und der Drehfalle vorhanden, so dass diese durch eine Drehung im Uhrzeigersinn geöffnet werden kann. Ferner ist in dieser Darstellung zu erkennen, dass die Ausnehmung 14 linksbündig mit der Gleitbuchse 6 zusammenwirkt.

Figur 3 zeigt die Konstellation gemäß Figur 2 nach einem Unfall. Die Gleitbuchse hat sich so plastisch deformiert, dass die Ausnehmung nun rechtsbündig mit der Ausnehmung 14 zusammenwirkt. Die Drehfalle 2 und die Rastklinke 3 haben sich beide relativ zu dem Gehäuse nach links verschoben. Dadurch liegt die Drehfalle an zwei Anlagepunkten 11 des Gehäuses an, so dass dessen Drehung im Uhrzeigersinn unmöglich ist. Die Behinderung der Drehung der Drehfalle 2 wird vorzugsweise durch eine entsprechende Formgebung 2.3 der Drehfalle im Bereich zumindest eines Anlagepunktes unterstützt. In dem vorliegenden Fall ist die Drehfalle abgeflacht, was die Berührungsfläche zwischen der Drehfalle und dem Gehäuse vergrößert. Auch die Rastklinke liegt nach einem Unfall vorzugsweise an dem Gehäuse an, so dass auch dessen Drehung zumindest erschwert ist. Die Behinderung der Drehung der Rastklinke 3 wird vorzugsweise durch eine entsprechende Formgebung 3.2 der Rastklinke im Bereich zumindest eines Anlagepunktes unterstützt. In dem vorliegenden Fall ist die Rastklinke 3 abgeflacht, was die Berührungsfläche zwischen der Rastklinke und dem Gehäuse vergrößert. Des Weiteren oder zusätzlich können zumindest einige Bauteile des erfindungsgemäßen Verriegelungselementes, insbesondere die Drehfalle 2 und/oder das Gehäuse 1, mit einer geringeren Materialstärke und/oder einem einfacheren Material ausgestaltet werden, weil durch die zusätzlichen Anlagepunkte 11 eine bessere Lastverteilung erfolgt.

Die Verstellungseinrichtung gemäß den Figuren 2 und 3 kann zusätzlich eine Toleranzausgleichsklinke 4 aufweisen, die sich dann bei einem Crash ebenfalls relativ zu dem Gehäuse verschiebt und vorzugsweise an dem Gehäuse anliegt.

### Bezugszeichenliste:

- 1: Gehäuseteil, Seitenplatte
- 2: Drehfalle
- 2.1: Schlitz
- 2.2: Anlagefläche
- 2.3: Formgebung, Abflachung
- 3: Rastklinke
- 3.1: Anlagefläche
- 3.2: Formgebung, Abflachung
- 4: Toleranzausgleichsklinke
- 4.1: Anlagefläche
- 5: Buchse, Lager
- 5': Buchse, Lager
- 6: Gleitbuchse, Lager
- 6': Gleitbuchse, Lager
- 7: Feder
- 8: Gehäuseteil
- 9: Verriegelungselement
- 10: Spalt
- 11: Anlagepunkt
- 12: Bolzen
- 13: Ausnehmung im Gehäuse, Öffnung
- 13': Ausnehmung im Gehäuse, Öffnung
- 14: Ausnehmung in der Drehfalle, Bohrung
- 15: Ausnehmung in der Rastklinke, Bohrung

## Patentansprüche

1. Verriegelungselement (9) für einen Fahrzeugsitz zur Verriegelung der Rückenlehne an einem Sitzteil und/oder der Karosserie eines Fahrzeuges, mit einer drehbar gelagerten Drehfalle (2), die verriegelnd mit einem Bolzen (12) zusammenwirkt, der mit dem Sitzteil oder der Karosserie verbunden ist, und einer drehbar gelagerten Rastklinke (3), die die Drehfalle (2) in ihrer verriegelnden Position sichert, wobei die Drehfalle (2) und die Rastklinke (3) jeweils mit einem Lager (5, 5', 6, 6') an einem Gehäuseteil (1, 8) eines Gehäuses des Verriegelungselements (9) gelagert sind, **dadurch gekennzeichnet, dass** sich die Lager (5, 5', 6, 6') bei einem Unfall jeweils deformieren, wodurch sich die Drehfalle (2) und die Rastklinke (3) parallel zu dem Gehäuseteil (1, 8) verschieben, wobei die Lager (5, 5', 6, 6') jeweils eine Buchse (5, 5') und eine Gleitbuchse (6, 6') aufweisen, wobei die Buchsen (5, 5') in den Öffnungen (13, 13') in dem Gehäuse gelagert sind und die Gleitbuchsen (6, 6') jeweils an ihrem inneren Umfang mit einer der Buchsen (5, 5') und an ihrem äußeren Umfang mit der Bohrung (14) der Drehfalle (2) bzw. der Bohrung (15) der Rastklinke (3) zusammenwirken.

2. Verriegelungselement (9) nach Anspruch 1, **dadurch gekennzeichnet, dass** die Drehfalle (2) durch die Verschiebung mindestens einen zusätzlichen Anlagepunkt (11) an dem Gehäuseteil (1, 8) erhält.

3. Verriegelungselement (9) nach einem der voranstehenden Ansprüche,
**dadurch gekennzeichnet, dass** es eine Toleranzausgleichsklinke (4) aufweist, die bei einem Unfall ebenfalls zu dem Gehäuseteil (1, 8) verschoben wird.

4. Verriegelungselement (9) nach Anspruch 3, **dadurch gekennzeichnet, dass** die Toleranzausgleichsklinke (4) dasselbe Lager (5', 6') hat wie die Rastklinke (3).

5. Verriegelungselement (9) nach einem der voranstehenden Ansprüche,
**dadurch gekennzeichnet, dass** die Gleitbuchse (6, 6') plastisch deformierbar ist.

6. Verriegelungselement (9) nach einem der voranstehenden Ansprüche,
**dadurch gekennzeichnet, dass** sowohl an der Drehfalle (2) als auch an der Rastklinke (3) Drehfedern (7) vorgesehen sind, die die Drehfalle (2) und die Rastklinke (3) jeweils gegen den Uhrzeigersinn drehend vorspannen.

## Claims

1. Locking element (9) for a vehicle seat for locking the backrest on a seat part and/or the body of a vehicle, having a rotatably mounted rotary catch (2) which interacts in a locking manner with a pin (12) which is connected to the seat part or the vehicle body, and a rotatably mounted latching pawl (3) which secures the rotary catch (2) in its locking position, the rotary catch (2) and the latching pawl (3) being mounted in each case by way of a bearing (5, 5', 6, 6') on a housing part (1, 8) of a housing of the locking element (9), **characterized in that** the bearings (5, 5', 6, 6') deform in each case in the event of an accident, as a result of which the rotary catch (2) and the latching pawl (3) are displaced parallel to the housing part (1, 8), the bearings (5, 5', 6, 6') in each case having a bush (5, 5') and a sliding bush (6, 6'), the bushes (5, 5') being mounted in the openings (13, 13') in the housing, and the sliding bushes (6, 6') interacting in each case on the inner circumference with one of the bushes (5, 5') and on the outer circumference with the bore (14) of the rotary catch (2) or the bore (15) of the latching pawl (3).

2. Locking element (9) according to Claim 1, **characterized in that** the rotary catch (2) obtains at least one additional bearing point (11) against the housing part (1, 8) as a result of the displacement.

3. Locking element (9) according to either of the preceding claims, **characterized in that** it has a tolerance compensation pawl (4) which, in the event of an accident, is likewise displaced towards the housing part (1, 8).

4. Locking element (9) according to Claim 3, **characterized in that** the tolerance compensation pawl (4) has the same bearing (5', 6') as the latching pawl (3).

5. Locking element (9) according to one of the preceding claims, **characterized in that** the sliding bush (6, 6') is plastically deformable.

6. Locking element (9) according to one of the preceding claims, **characterized in that** torsion springs (7) are provided both on the rotary catch (2) and on the latching pawl (3), which torsion springs (7) prestress the rotary catch (2) and the latching pawl (3) in each case in a rotational manner counter to the clockwise direction.

## Revendications

1. Élément de verrouillage (9) pour un siège de véhicule pour le verrouillage du dossier à une partie de siège et/ou à la carrosserie d'un véhicule, comprenant un pêne (2) supporté de manière rotative qui coopère par verrouillage avec un axe (12) connecté à la partie de siège ou à la carrosserie, et comprenant un cliquet d'arrêt (3) supporté de manière rotative qui fixe le pêne (2) dans sa position de verrouillage, le pêne (2) et le cliquet d'arrêt (3) étant chacun supporté avec un palier (5, 5', 6, 6') sur une partie de boîtier (1, 8) d'un boîtier de l'élément de verrouillage (9), **caractérisé en ce que** les paliers (5, 5', 6, 6'), en cas d'accident, se déforment à chaque fois, de sorte que le pêne (2) et le cliquet d'arrêt (3) se déplacent parallèlement à la partie de boîtier (1, 8), les paliers (5, 5', 6, 6') présentant à chaque fois une douille (5, 5') et un manchon coulissant (6, 6'), les douilles (5, 5') étant supportées dans les ouvertures (13, 13') dans le boîtier et les manchons coulissants (6, 6') coopérant à chaque fois au niveau de leur périphérie interne avec l'une des douilles (5, 5 ') et, au niveau de leur périphérie extérieure, avec l'alésage (14) du pêne (2) respectivement l'alésage (15) du cliquet d'arrêt (3).

2. Élément de verrouillage (9) selon la revendication 1, **caractérisé en ce que** le pêne (2), par déplacement, acquiert au moins un point d'appui supplémentaire (11) contre la partie de boîtier (1, 8).

3. Élément de verrouillage (9) selon l'une quelconque des revendications précédentes, **caractérisé en ce qu'**il présente un cliquet de compensation des tolérances (4) qui, en cas d'accident, est également déplacé vers la partie de boîtier (1, 8).

4. Élément de verrouillage (9) selon la revendication 3, **caractérisé en ce que** le cliquet de compensation des tolérances (4) a le même palier (5', 6') que le cliquet d'arrêt (3).

5. Élément de verrouillage (9) selon l'une quelconque des revendications précédentes, **caractérisé en ce que** le manchon coulissant (6, 6') peut être déformé plastiquement.

6. Élément de verrouillage (9) selon l'une quelconque des revendications précédentes, **caractérisé en ce que** des ressorts de torsion (7) sont prévus à la fois au niveau du pêne (2) et au niveau du cliquet d'arrêt (3), lesquels précontraignent le pêne (2) et le cliquet d'arrêt (3) à chaque fois dans le sens opposé aux aiguilles d'une montre.
